# EUROPÄISCHE PATENTANMELDUNG

(11) **EP 2 641 945 A1**
(43) Veröffentlichungstag der Anmeldung: **25.09.2013**
(21) Anmeldenummer: 12160390.6
(22) Anmeldetag: 20.03.2012
(51) Int. Cl.: C09D 175/16, C09D 7/06, C09D 7/12, C09D 201/00

(54) **Lack zur Beschichtung von Riefen aufweisenden Kunststoffoberflächen**

(71) Anmelder: profine GmbH, 53840 Troisdorf (DE); Rhenocoll-Werk eK., 68309 Mannheim (DE)
(72) Erfinder: Eger, Arno, 66987 Thaleischweiler (DE); Götz, Gerhard, 90574 Rosstal (DE); Zimmermann, Werner, 66887 Ulmet (DE); Arend, Sandra, 66916 Breitenbach (DE)
(74) Vertreter: Wübken, Ludger

(57) **Zusammenfassung**

Zur Beschichtung von Riefen aufweisenden Kunststoffoberflächen wird ein Lack vorgeschlagen, enthaltend wenigstens ein vernetzbares Bindemittel, wenigstens ein in dem Bindemittel dispergiertes Wachs und in dem Bindemittel dispergierte nanoskalige anorganische Partikel, insbesondere Metalloxide.

## Beschreibung

Die Erfindung betrifft einen Lack zur Beschichtung von Kunststoffoberflächen, die Riefen aufweisen.

### Technisches Gebiet

Bei der Extrusion von Kunststoffprofilen o. dgl., beispielsweise von Hohlkammerprofilen aus PVC, wie sie in großem Umfang für die Herstellung von Fenstern und Türen eingesetzt werden, ist es gelegentlich unvermeidbar, dass die Kunststoffoberflächen in Extrusionsrichtung verlaufende Riefen, also Vertiefungen in der Oberfläche, aufweisen.

### Stand der Technik

Aus der DE 22 46 497 B2 ist es bekannt, solche PVC-Hohlkammerprofile mit einer Oberflächenschicht aus Polymethylmetacrylat (PMMA) zu koextrudieren. Die koextrudierte PMMA-Oberfläche ist dabei in der Lage, Riefen und andere Oberflächenstörungen des PVC-Profils weitgehend zu überdecken. Eine Coextrusion mit PMMA ist jedoch aufwändig.

Weiterhin ist es grundsätzlich bekannt, Kunststoffoberflächen zu lackieren. Übliche Lacke sind allerdings nicht in der Lage, typische, bei der Extrusion von Kunststoffoberflächen, insbesondere von PVC entstehende Riefen größerer Tiefe zu überdecken.

### Aufgabe

Aufgabe der vorliegenden Erfindung ist es daher, eine Oberflächenbeschichtung, insbesondere einen Lack, zur Verfügung zu stellen, der auch tiefere Riefen in Kunststoffoberflächen, insbesondere PVC-Profilen, ausgleichen kann.

### Darstellung der Erfindung

Die Erfindung löst diese Aufgabe durch einen Lack nach Anspruch 1, insbesondere in Verbindung mit einem oder mehreren der Merkmale der Ansprüche 2 bis 13, bzw. durch ein Verfahren nach einem der Ansprüche 14 oder 15. Weiterhin ist Gegenstand der Erfindung ein mit dem erfindungsgemäßen Lack beschichtetes PVC-Substrat.

Unter Riefen im Sinne der vorliegenden Erfindung werden in Extrusionsrichtung verlaufende, insbesondere quasi endlos verlaufende, wenigstens 0,2 mm tiefe und wenigstens 0,2 mm breite Vertiefungen der Oberfläche verstanden.

Der erfindungsgemäße Lack zur Beschichtung von Riefen aufweisenden Kunststoffoberflächen enthält wenigstens ein vernetzbares Bindemittel, wenigstens ein in dem Bindemittel dispergiertes Wachs sowie in dem Bindemittel dispergierte nanoskalige anorganische Partikel, insbesondere Metalloxide.

Als vernetzbares Bindemittel wird bevorzugt ein wasserbasierter Polyurethan-Acrylatlack verwendet. Wasserbasiert bedeutet, dass das eingesetzte Lösungsmittel für den Lack überwiegend aus Wasser besteht. Daneben können auch organische Lösungsmittel in mehr oder weniger großen Anteilen verwendet werden, um das Trocknungsverhalten des Lackes und/oder dessen Haftung auf dem Substrat zu beeinflussen. Bevorzugt enthält der Lack jedoch weniger als 10 Gew.-% organische Lösungsmittel.

Es ist erfindungswesentlich, dass der Lack wenigstens ein im Bindemittel dispergiertes Wachs aufweist. Es hat sich als vorteilhaft erwiesen, wenn dieses Wachs ein modifiziertes, in einem Lösungsmittel gelöstes bzw. emulgiertes, bei Raumtemperatur flüssiges HD-Polyethylenwachs einzusetzen, wobei die Emulsion eine Dichte von > 1,4 kg/m³ bei 20 °C aufweist.

Als Basis für die bevorzugt eingesetzte Wachsemulsion wird Wasser eingesetzt. Um die Mindestfilmbildetemperatur des Wachses herabzusetzen, werden dem Fachmann an sich bekannte organische Lösungsmittel zugesetzt, so dass wenigstens ein Teil des Wachses bei Raumtemperatur und bevorzugt bei noch geringeren Temperaturen in Lösung verbleibt.

Damit liegt die Dichte dieses Wachses höher als die mittlere Dichte des erfindungsgemäßen Lackes, so dass sich diese Wachse schneller in dem applizierten Lack auf der Kunststoffoberfläche absetzen können. Es wird vermutet, dass sich hierdurch die Riefen ausgleichende Wirkung des erfindungsgemäßen Lackes positiv beeinflusst wird.

Nach einer bevorzugten Ausführungsform der Erfindung werden wenigstens zwei Wachse mit unterschiedlichen Schmelzpunkten und Dichten eingesetzt, wobei wiederum bevorzugt wenigstens eines der eingesetzten Wachse ein modifiziertes, in einem Lösungsmittel gelöstes bzw. emulgiertes HD-Polyethylenwachs ist, das in Form einer Emulsion eingesetzt wird. Solche bei Raumtemperatur noch flüssigen HD-Polyethylenwachse sind vermutlich hauptverantwortlich für die überraschend gefundene Eigenschaft des erfindungsgemäßen Lackes, auch größere bzw. tiefere Riefen in Kunststoffoberflächen, insbesondere bei PVC-Profilen, nahezu vollständig abzudecken.

Neben dem bei Raumtemperatur flüssigen, in Wasser emulgierten HD-Polyethylenwachs wird nach einer besonders bevorzugten Ausführungsform der Erfindung noch wenigstens ein weiteres, bei Raumtemperatur festes organisches Polymerwachs, insbesondere ein sogenanntes mikronisiertes Polymerwachs, eingesetzt. Solche Wachse beeinflussen insbesondere die Härte, die Blockfestigkeit, die Ritzhärte und andere mechanischen Eigenschaften sowie die Oberflächengüte der erfindungsgemäßen Lacke positiv. Bevorzugt weisen diese Wachse eine Dichte < 1 kg/dm³ auf.

Neben dem im Bindemittel dispergierten Wachs enthält der erfindungsgemäße Lack zur Beschichtung von Riefen aufweisenden Kunststoffoberflächen in dem Bindemittel dispergierte nanoskalige anorganische Partikel. Nach einer bevorzugten Ausführungsform der Erfindung werden als nanoskalige anorganische Partikel insbesondere Metalloxide, besonders bevorzugt Titandioxid und insbesondere Titandioxid in der Rutilkonfiguration eingesetzt.

Unter nanoskalig im Sinne der vorliegenden Erfindung werden Partikel verstanden, deren mittlere Abmessung < 100 nm beträgt. Bevorzugt werden Partikel eingesetzt, deren größte Abmessung < 100 nm beträgt. Nach einer besonders bevorzugten Ausführungsform der Erfindung beträgt die mittlere Teilchengröße d50 zwischen 10 und 70 nm. Es ist von wesentlicher Bedeutung, dass die Primärpartikel nicht oder in nicht nennenswertem Umfang in Form von größeren Agglomeraten vorliegen. Es werden daher bevorzugt Primärteilchen eingesetzt, die jeweils eine anorganische Oberflächenmodifizierung aufweisen, wie sie beispielsweise aus der WO 2008/023073 A1 bekannt sind. Aus solchen oberflächenmodifizierten ultrafeinen Partikeln lassen sich wässrige Dispersionen, bevorzugt in Form von Pasten, herstellen, die für die erfindungsgemäßen Lacke besonders geeignet sind.

Die erfindungsgemäß eingesetzten nanoskaligen anorganischen Partikel sind insbesondere für die gezielte Einstellung der Oberflächenspannung verantwortlich und beeinflussen die rheologischen Eigenschaften des Lackes.

Der erfindungsgemäße Lack kann bei einer ersten bevorzugten Ausführungsform der Erfindung vollständig transparent sein und weist dennoch eine hervorragende Riefen ausgleichende und überdeckende Eigenschaft sowie einen hervorragenden UV-Schutz auf. auf.

Nach einer alternativen Ausführungsform der Erfindung weist der erfindungsgemäße Lack zusätzlich Pigmente auf. Zum einen können die eingesetzten Pigmente beispielsweise übliche Weißpigmente, insbesondere Titandioxid mit einer Partikelgröße > 500 nm sein. Nach einer bevorzugten Ausführungsform der Erfindung werden nicht-weiße anorganische Pigmente, bevorzugt anorganische, insbesondere Pigmente eingesetzt. Die erfindungsgemäß eingesetzten nanoskaligen anorganischen Partikel beeinflussen dabei die Grundfarbe der nicht-weißen anorganischen Pigmente nicht oder zumindest nicht im erheblichen Maße, so dass die erfindungsgemäßen Lacke einerseits ihre hervorragende Riefen überdeckende Eigenschaften aufweisen und andererseits in nahezu beliebigen Farben hergestellt werden können. Für nicht weiße Lacke beträgt der Anteil an TiO₂ mit einer Partikelgröße > 200 nm bevorzugt kleiner als 0,5 Gew.-%.

Der erfindungsgemäße Lack kann bei Bedarf hochglänzend eingestellt werden. Er kann bei Bedarf jedoch auch mit üblichen Mattierungsmitteln, insbesondere SiO₂ und/oder geeigneten Polymerpartikeln, Polymerwachsen etc. modifiziert werden. Soweit SiO₂ als Mattierungsmittel verwendet wird, beträgt die mittlere Teilchengröße bevorzugt zwischen 3 und 40 µm, insbesondere zwischen 4 und 15 µm. Die Teilchengröße beeinflusst maßgeblich die Oberflächenstruktur der getrockneten Lackoberfläche.

Der erfindungsgemäße Lack wird insbesondere durch Aufspritzen appliziert. Das Aufspritzen und anschließende Trocknen erfolgt bevorzugt unter Erwärmung auf eine Temperatur zwischen 40 °C und 60 °C.

Der erfindungsgemäße Lack ist in der Lagen Riefen in einem PVC-Substrat mit einer Tiefe von 0,2 bis 0,8 mm zu wenigstens 95 % ihrer Tiefe einzuebnen.

## Patentansprüche

1. Lack zur Beschichtung von Riefen aufweisenden Kunststoffoberflächen, **enthaltend**
- wenigstens ein vernetzbares Bindemittel,
- wenigstens ein in dem Bindemittel dispergiertes Wachs,
- in dem Bindemittel dispergierte nanoskalige anorganische Partikel, insbesondere Metalloxide.

2. Lack nach Anspruch 1, **gekennzeichnet durch** einen wasserbasierten Polyurethan-/Acrylatlack als vernetzbares Bindemittel.

3. Lack nach Anspruch 1 oder 2, **dadurch gekennzeichnet, dass** zwei Wachse mit unterschiedlichen Schmelzpunkten eingesetzt werden.

4. Lack einem der Ansprüche 1 bis 3, **dadurch gekennzeichnet, dass** wenigstens eines der eingesetzten Wachse in Form einer Emulsion eines modifizierten, in einem Lösungsmittel gelösten HD-Polyethylenwachses eingesetzt wird.

5. Lack einem der Ansprüche 1 bis 4, **dadurch gekennzeichnet, dass** wenigstens eines der eingesetzten Wachse ein mikronisiertes, bei Raumtemperatur festes organisches Polymerwachs ist.

6. Lack einem der Ansprüche 1 bis 5, **dadurch gekennzeichnet, dass** wenigstens eines der eingesetzten Wachse eine Dichte > 1,4 kg/m³ bei 20 °C aufweist.

7. Lack nach einem der Ansprüche 1 bis 6, **dadurch gekennzeichnet, dass** als nanoskaliges Metalloxid ein TiO₂ eingesetzt wird.

8. Lack nach Anspruche 7, **dadurch gekennzeichnet, dass** der Anteil an TiO₂ mit einer Partikelgröße > 200 nm kleiner als 0,5 Gew.-% beträgt.

9. Lack nach Anspruch 7 oder 8, **dadurch gekennzeichnet, dass** das nanoskaliges Metalloxid überwiegend aus inertisiertem TiO₂ in der Rutilkonfiguration besteht.

10. Lack nach einem der Ansprüche 7 bis 9, **dadurch gekennzeichnet, dass** das TiO₂ eine mittlere Teilchengröße d₅₀ zwischen 10 und 70 nm aufweist.

11. Lack nach einem der Ansprüche 1 bis 10, **dadurch gekennzeichnet, dass** der Lack zusätzlich ein oder mehrere anorganische Pigmente enthält.

12. Lack nach einem der Ansprüche 1 bis 11, **dadurch gekennzeichnet, dass** der Lack zusätzlich Mattierungsmittel aufweist.

13. Lack nach Anspruch 12, **dadurch gekennzeichnet, dass** als Mattierungsmittel SiO₂ verwendet wird mit einer mittleren Teilchengröße zwischen 3 und 40 µm, insbesondere zwischen 4 und 15 µm.

14. Verfahren zum Beschichten von Riefen aufweisenden Kunststoffoberflächen durch Applizieren, insbesondere Aufspritzen, Erwärmen und Trocknen eines Lackes nach einem der Ansprüche 1 bis 13.

15. Verfahren nach Anspruch 14, **dadurch gekennzeichnet, dass** als Substrat ein Riefen aufweisendes PVC-Material verwendet wird.

16. Beschichtetes PVC-Substrat, hergestellt mit dem Verfahren nach Anspruch 14 oder 15, **dadurch gekennzeichnet, dass** das PVC-Substrat Riefen mit einer Tiefe > 0,2 mm aufweist und die Riefen zu wenigstens 95 % ihrer Tiefe durch die Lackierung eingeebnet wurden.
